# EUROPÄISCHE PATENTSCHRIFT

(11) **EP 2 950 994 B1**
(45) Veröffentlichungstag und Bekanntmachung des Hinweises auf die Patenterteilung: **02.06.2021**
(21) Anmeldenummer: 13802235.5
(22) Anmeldetag: 21.11.2013
(51) Int. Cl.: B29L 7/00, B29C 43/58, B29K 105/08, B29C 43/24, D01G 31/00

(54) **WALZWERK FÜR FASERBÄNDER UND VORRICHTUNG ZUR ÜBERWACHUNG EINES WALZWERKES FÜR FASERBÄNDER**
ROLLING MILL FOR FIBRE BANDS AND DEVICE FOR MONITORING A ROLLING MILL FOR FIBRE BANDS
LAMINOIR POUR BANDES FIBREUSES ET DISPOSITIF DE SURVEILLANCE D'UN LAMINOIR POUR BANDES FIBREUSES

(30) Priorität: 01.02.2013 DE 102013101015
(43) Veröffentlichungstag der Anmeldung: 09.12.2015
(73) Patentinhaber: Trützschler GmbH & Co. KG, 41199 Mönchengladbach (DE)
(72) Erfinder: MEIER, Dirk, 41199 Mönchengladbach (DE)
(86) Internationale Anmeldenummer: PCT/EP2013/003512
(87) Internationale Veröffentlichungsnummer: WO 2014/117792

(56) Entgegenhaltungen:
- DE-A1- 2 141 741
- DE-A1-102005 009 159
- DE-A1-102008 038 392
- JP-A- H10 182 004
- US-A- 2 332 289

## Beschreibung

Die Erfindung betrifft ein Walzwerk für Faserbänder, umfassend mindestens eine fest angeordnete Walze und eine einstellbare Walze, wobei die Walzen jeweils in einem ersten linken und einem zweiten rechten Gestell gelagert sind, mit einem Sensor zur Überwachung von Betriebsunregelmäßigkeiten. Weiterhin betrifft die Erfindung eine Vorrichtung zur Überwachung eines Walzwerkes für Faserbänder.

In der Textilmaschinenindustrie ist es bekannt, Bänder und Fäden mittels Sensoren auf einen Band- oder Fadenbruch zu überwachen. Hierzu können beispielsweise Lichtschranken verwendet werden, die vor den Walzen oder Kalandern angeordnet werden. Weiterhin ist es bekannt, gegenüberliegende und miteinander zusammenwirkende Bauteile mittels Massekontakt oder Nährungsschalter in der Funktionsweise zu kontrollieren. Damit wird eine Baugruppe - beispielsweise ein Streckwerk oder eine Anordnung von Walzenpaaren - über verschiedene Sensoren zu unterschiedlichen Funktionen überwacht. Der steuerungstechnische Aufwand zur Verknüpfung der Sensoren ist sehr hoch.

In der DE 102008038392 A1 wird ein Paar Messwalzen mit einem Abstandssensor überwacht. Dabei misst der Sensor nicht parallel zur Walzenachse, sondern direkt deren Abstand.

Die DE 102005009159 A1 offenbart eine Überwachung des Walzspaltes auf Faserbruch, wobei der Sensorstrahl parallel zu den Walzachsen ausgerichtet ist. Mit dieser Anordnung des Sensors ist weder eine Überwachung der Walzenstellung noch eine Überwachung der Betriebsstellung möglich.

Es ist Aufgabe der Erfindung ein Walzwerk für Faserbänder zu schaffen, das preiswert aufgebaut ist und bei dem Betriebsunregelmäßigkeiten zuverlässig erkannt werden. Weiterhin ist es Aufgabe der Erfindung, eine Vorrichtung zur Überwachung eines Walzwerkes für Faserbänder zu schaffen.

Die Erfindung löst die gestellte Aufgabe durch die Lehre nach Anspruch 1 und Anspruch 7; weitere vorteilhafte Ausgestaltungsmerkmale der Erfindung sind durch die Unteransprüche gekennzeichnet.

Gemäß der technischen Lehre nach Anspruch 1 umfasst das Walzwerk für Faserbänder mindestens eine fest angeordnete Walze und eine einstellbare Walze, wobei die Walzen jeweils in einem ersten linken und einem zweiten rechten Gestell gelagert sind. Weiterhin ist das Walzwerk mit einem Sensor zur Überwachung von Betriebsunregelmäßigkeiten ausgestattet, wobei der Sensor über die Breite des Walzwerkes Betriebsunregelmäßigkeiten erkennt.

Mit den Merkmalen der Erfindung ist es möglich, mit nur einem Sensor Betriebsunregelmäßigkeiten zwischen den linken oder rechten Gestellen und Betriebsunregelmäßigkeiten zwischen den Walzen zu erkennen, wenn beispielsweise die verschwenkbare Walze über ihre gesamte Breite nicht vollständig in den Betriebszustand bzw. Geschlossenstellung verschwenkt wurde. Weiterhin kann mit diesem einen Sensor gleichzeitig auch ein Bandstau oder Bandabriss vor den Walzen überwacht werden. Mit der Anordnung können Abweichungen auf einer Seite - durch beispielsweise ein gerissenes Faserband - aber auch über die komplette Breite der Walzen festgestellt werden, wobei im Gegensatz zum Stand der Technik nur noch ein Sensor benötigt wird, was die Steuerung der Gesamtanlage vereinfacht. Ein weiterer Vorteil der Anordnung ist, dass über die Breite der Walzenanordnung viel kleinere Abweichungen festgestellt werden können, als bei der Verwendung von jeweils einem Sensor pro Gestellseite.

Als linkes bzw. rechtes Gestell ist jeweils eine Seite der Lagerung einer beidseitig gelagerten Walze in einem Walz- oder Streckwerk zu verstehen, unabhängig von der räumlichen Anordnung der Walzen. Die Breite der Walzen bzw. des Walzwerkes wird hinsichtlich der räumlichen Ausdehnung mit der Länge der Walzen gleichgesetzt, da dies im Wesentlichen der Arbeitsbreite des Walzwerkes entspricht.

Durch die Erfindung kann auf die Näherungsschalter und Massekontakte verzichtet werden, die bisher die Lage der Walzen zueinander überwacht haben. Der Sensor, der bisher vor den Walzen angeordnet war, um einen Bandstau oder Bandabriss zu überwachen, übernimmt diese Aufgaben, so dass durch die erfindungsgemäße Anordnung des Sensors am Gestell der Walzen beide Funktionen miteinander kombiniert werden können.

Dabei ist der Sensor als Lichtschranke ausgebildet und kann damit sehr leicht den unterschiedlichen Breiten der Walzenanordnungen angepasst werden.

Eine weitere Verbesserung sieht vor, dass der Sensor einen Sender und einen Empfänger umfasst, wobei der Sender auf einer ersten, beispielsweise linken Seite des Gestells, und der Empfänger auf einer zweiten, beispielsweise rechten Seite des Gestells angeordnet ist, oder umgekehrt. Die Lichtschranke ist damit als Einweglichtschranke ausgeführt, wodurch ein robuster Einsatz möglich ist.

In einer alternativen Ausführungsform sind der Sensor auf einer ersten Seite des Gestells und ein Reflektor auf einer zweiten Seite des Gestells angeordnet. Diese so genannte Reflexlichtschranke ist besonders geeignet für Umgebungen mit engen Bauräumen, bei denen nur an einer Seite der Anlage eine Einstellbarkeit oder Kabelführung möglich ist.

Die einstellbare Walze ist zur feststehenden Walze verschwenkbar angeordnet. In der Betriebsstellung liegen beide Walzen aufeinander. In der Offenstellung ist die obere bzw. einstellbare Walze verschwenkt, so dass ein großer Spalt zwischen den Walzen entsteht. Damit kann sehr leicht ein Faserband, ein Faserflor oder ein Vlies eingelegt werden, ohne dass eine Demontage von Bauteilen erfolgt.

In konstruktiver Ausgestaltung sind sowohl die linken Gestelle wie auch die rechten Gestelle des Walzwerkes mit einer Schwenkplatte verbunden, wobei ein Drehpunkt in den Gestellen der feststehenden Walze angeordnet ist. Damit wird die einstellbare Walze einschließlich ihrer Gestelle um den Drehpunkt verschwenkt. Eine Demontage der Lager wird damit vermieden.

Eine weitere Verbesserung sieht vor, dass der Sensor an mindestens einer Schwenkplatte angeordnet ist. Damit vollzieht der Sensor ebenfalls die Schwenkbewegung der einstellbaren Walze. Jede Änderung der einstellbaren Walze aus der Betriebsstellung überträgt sich damit auf den Sensor, so dass kleinste Abweichungen feststellbar sind.

Da sich der Sensor in einem Ausführungsbeispiel mit der einstellbaren Walze bewegt, ist an einem Gestell der fest angeordneten Walze eine Einstellvorrichtung zwischen dem Sender und dem Empfänger oder Reflektor angeordnet. Bei einer Abweichung in der Anordnung der Walzen unterbricht die Einstellvorrichtung den Lichtstrahl und löst das Signal für die Steuerung aus.

Alternativ kann der Sensor an einem Gestell der fest angeordneten Walze befestigt sein, so dass eine bewegbare Einstellvorrichtung oder eine Schwenkplatte das Signal auslöst.

Um eine größtmögliche Abweichung von der Betriebsstellung feststellen zu können, ist die Einstellvorrichtung an einem Gestell der feststehenden Walze angeordnet, das dem Sensor gegenüberliegt. Damit erfolgt die Feststellung von Abweichungen des Betriebszustandes über die gesamte Walzenbreite bzw. die Breite der gesamten Walzenanordnung, also der Walzen mit den seitlichen Gestellen, wodurch kleinste Winkelunterschiede zwischen den Walzen oder Abstände zwischen den Gestellen festgestellt werden können.

Die Vorrichtung zur Überwachung eines Walzwerkes mit mindestens einer fest angeordneten Walze und einer einstellbaren Walze ist dadurch gekennzeichnet, dass ein Sensor verwendet wird, der über die Breite des Walzwerkes Betriebsunregelmäßigkeiten erkennt. Damit kann sowohl ein Faserbandbruch, ein Faserbandstau oder auch ein nicht verriegeltes Walzwerk erkannt werden. Das ausgelöste Signal des Sensors wird in der Steuerung der Maschine oder Anlage verarbeitet, so dass die Zuführung von weiteren Bändern, Fasern oder Vlies unterbrochen wird und das Bedienpersonal gewarnt wird.

Dabei ist der Sensor als Lichtschranke ausgebildet. Die Vorrichtung ist damit unabhängig von der Breite der Walzen bzw. des Walzwerkes und kann als Nachrüstsatz für verschiedene Maschinentypen und Maschinenbreiten verwendet werden.

Das Signal des Sensors wird dann ausgelöst, wenn über die Breite des Walzwerkes oder auf der gegenüberliegenden Seite des Walzwerkes der Lichtstrahl unterbrochen wird. Das kann durch einen Bandstau vor den Walzen erfolgen, oder wenn nur eine Seite des Walzwerkes nicht verriegelt ist. Weiterhin kann damit auch ein einseitiger Bandabriss erkannt werden, wenn nur ein Teil des Bandes durch die Walzen läuft und damit die Walzen gegebenenfalls nicht mehr parallel zueinander ausgerichtet sind.

Unabhängig von der Anordnung des Sensors ist eine Einstellvorrichtung vorgesehen, die beispielsweise als Blende ausgebildet sein kann und den Lichtstrahl unterbricht. Dabei ist die Blende auf der gegenüberliegenden Seite des Sensors am Walzwerk angeordnet. Die Blende kann an den Gestellen der feststehenden Walze angeordnet sein, wenn der Sensor mit der verstellbaren Walze mit verschwenkbar ist. Der Sensor kann aber auch an den Gestellen der feststehenden Walze angeordnet sein, wobei dann eine Schwenkplatte den Lichtstrahl unterbrechen kann und das Signal auslöst. Unabhängig davon wird das Signal ausgelöst, wenn ein Bandstau vor den Walzen den Lichtstrahl unterbricht.

Die Erfindung wird nachfolgend anhand eines möglichen schematisch dargestellten Ausführungsbeispieles näher erläutert. Es zeigt:

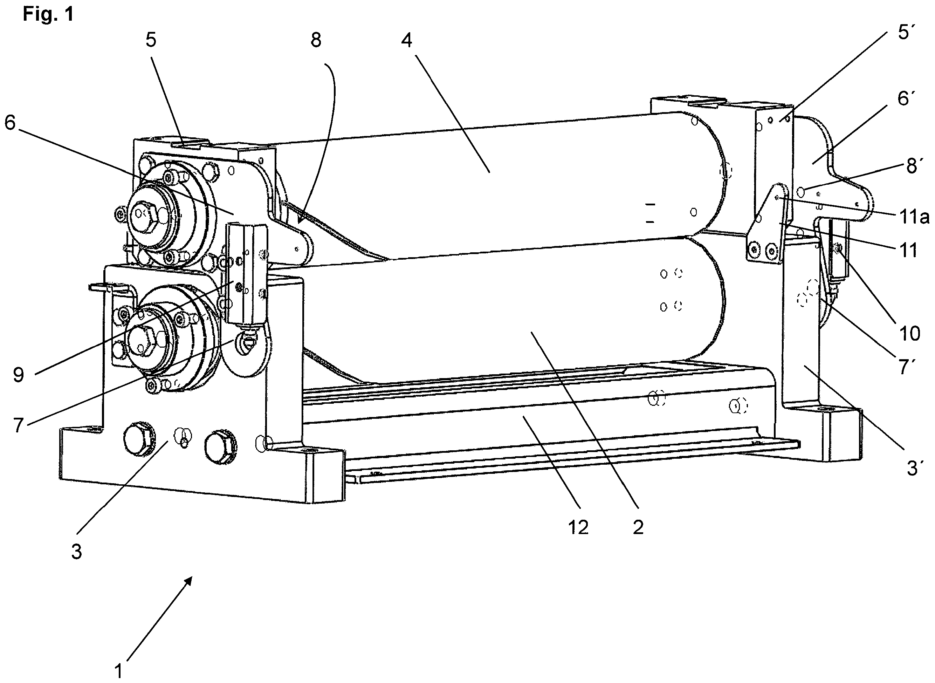

- Figur 1:: eine perspektivische Ansicht eines Walzenpaares.

In Figur 1 ist ein Walzwerk 1 dargestellt, wie es beispielsweise bei Wickelvorrichtungen, Streckwerken oder in anderen Maschinen der Textilindustrie verwendet wird, um Faserbänder, ein Faserflor oder ein Vlies zu verdichten, zu vergleichmäßigen, zu doublieren oder zu strecken. Das Walzwerk 1 umfasst mindestens eine untere fest angeordnete Walze 2 und eine obere einstellbare Walze 4, die einstellbar und/oder verschwenkbar zur unteren Walze 2 gelagert ist. Beide Walzen 2, 4 sind gemeinsam oder separat über einen nicht dargestellten ankoppelbaren Antrieb antreibbar. Die untere Walze 2 wird über beidseitig angeordnete Lagerzapfen in jeweils einem unteren Gestell 3, 3' mittels Gleit- oder Wälzlager gelagert. Das untere Gestell 3, 3' ist ausgebildet, auf einem Tisch oder Rahmen, beispielsweise einer Wickelmaschine, befestigt zu werden und weist einen Querträger 12 auf, der das in der Figur 1 linke Gestell 3 mit dem rechten Gestell 3' verbindet, um eine ausreichende Quersteifigkeit zu erzielen. Die untere Walze 2 ist daher fest auf einem Tisch oder Rahmen drehbar angeordnet.

Die obere Walze 4 wird ebenfalls über beidseitig angeordnete Lagerzapfen in jeweils einem oberen Gestell 5, 5'gelagert. Unabhängig von der räumlichen Anordnung der Walzen 2, 4 sind beide Walzen jeweils beidseitig in einem Gestell gelagert, wobei zur besseren Beschreibung die Gestelle 3 und 5 als erste (in der Darstellung der Figur 1) linke Gestelle bezeichnet werden und die Gestelle 3' und 5' als zweite rechte Gestelle bezeichnet werden. Ebenso bezieht sich die Bezeichnung oben oder unten nur auf die Darstellung der Bauteile in der Figur 1, unabhängig von der tatsächlichen räumlichen Anordnung des Walzwerkes in einer Maschine oder Anlage.

Das in Figur 1 linke und rechte Gestell 5, 5' ist nur über die obere Walze 4 verbunden. Das obere Gestell 5, 5' liegt auf dem unteren Gestell 3, 3' auf, so dass das Gewicht von dem oberem Gestell 5, 5' und der oberen Walze 4 das Faserband verdichtet oder streckt. Eine weitere ggf. steuerbare Kraftbelastung der Walzen 2, 4 kann durch eine federbelastete, pneumatische oder hydraulische Vorrichtung erreicht werden, die das untere Gestell 3, 3' mit dem oberen Gestell 5, 5' verbindet. Beidseitig ist an dem oberen Gestell 5, 5' eine Schwenkvorrichtung angeordnet, die die obere Walze 4 einschließlich des oberen Gestells 5, 5' von der unteren Walze 2 wegschwenken kann. Die Schwenkvorrichtung wird durch zwei Schwenkplatten 6, 6' gebildet, die einerseits mit dem oberen Gestell 5, 5' fest verbunden sind, andererseits drehbar am unteren Gestell 3, 3' angeordnet sind. Hierzu sieht das untere Gestell 3, 3' jeweils einen Drehpunkt 7, 7' vor, um den die Schwenkplatten 6, 6' einschließlich dem oberen Gestell 5, 5' und der oberen Walze 4 verschwenkbar sind. Alternativ zur Schwenkvorrichtung kann die obere Walze 4 auch eine Vorrichtung aufweisen, mit der ein großer Spalt zwischen der unteren oder oberen Walze 2, 4 herstellbar ist. Damit soll das einfache Einfädeln oder Einlegen eines Faserbandes, eines Flores oder Vlieses ermöglicht werden.

Für den automatischen Betrieb der Anlage aber auch für die Sicherheit des Personals ist es erforderlich, dass das Walzwerk 1 nur anfahren darf, wenn die Walzen 2, 4 in der Betriebsstellung verriegelt sind, also im Abstand zueinander eingestellt sind und nicht mehr um den Drehpunkt 7, 7' verschwenkbar sind. Als Betriebsstellung wird die Stellung angesehen, bei der die oberen Gestelle 5,5' auf den unteren Gestellen 3, 3' aufliegen und die Walzen 2, 4 mit einem eingestellten Abstand zueinander betrieben werden können. Je nach Automatisierungsgrad und Größe der Walzen 2, 4 kann die Schwenkvorrichtung manuell oder motorisch betrieben werden.

Damit Betriebsunregelmäßigkeiten bei der Verarbeitung des Faserbandes oder ein nicht verriegeltes Walzwerk 1 erkannt werden können, ist an den Schwenkplatten 6, 6' ein Sensor angeordnet, der erkennt, ob die Walzen 2, 4 in Betriebsstellung sind. Als Betriebsunregelmäßigkeit ist neben dem nicht verriegelten Walzwerk bzw. der nicht vollständig zurückgeschwenkten Walze 4 mit den Gestellen 5, 5' auch ein vollständiges oder teilweises Abreißen des Faserbandes, des Faserflores oder des Vlieses zu verstehen, dass sich beispielsweise vor den Walzen 2, 4 aufstauen kann.

Die Erfindung sieht vor, an dem Walzwerk 1 einen Sensor in Form einer Lichtschranke anzuordnen, die zum einen zwischen einer Offen- und Geschlossenstellung unterscheiden kann, zum anderen aber auch Abweichungen in der Bandführung feststellen kann.

Hierzu ist im Bereich einer Seite des Gestells 3, 5 ein Sender 9 einer Lichtschranke angeordnet, zu dem auf der anderen Seite des Gestells 3', 5' ein Empfänger 10 gehört. Da der Sensor die Distanz- und Lageabweichung der oberen Walze 4 von der unteren Walze 2 ermitteln soll, eignet sich jeder Montageort am unteren oder oberen Gestell 3, 3', 5, 5', der geeignet ist, eine Abweichung von der Betriebsstellung aufzuzeigen. Hierzu ist weiterhin eine nicht manipulierbare Einstellvorrichtung 11 notwendig, mit der der Sensor in Betriebsstellung justiert werden kann. Die Einstellvorrichtung 11 kann auch direkt mit dem Sender 9 oder Empfänger 10 verbunden sein, so dass beispielsweise wenn ein oberes Gestell 5, 5' nicht vollständig auf einem unteren Gestell 3, 3' aufliegt, der Sensor auslöst.

In diesem Ausführungsbeispiel sind der Sender 9 und der Empfänger 10 außerhalb des Bereiches der Walzen 2, 4 außen an den Schwenkplatten 6, 6' angeordnet. Damit der Lichtstrahl des Senders 9 den Empfänger 10 trifft, sind in den Schwenkplatten 6, 6' Bohrungen 8, 8' angeordnet, durch die der Lichtstrahl durchdringen kann. Die Anordnung von Sender 9 und Empfänger 10 außen auf den Schwenkplatten 6, 6' schützt den Sensor vor Staub und herumfliegenden Fasern, da zusammen mit den Bohrungen 8, 8' nur ein kleiner Bereich des Sensors dem Umgebungseinfluss beispielsweise einer Spinnerei ausgesetzt ist. Weiterhin ist der Sensor nicht im Bewegungsbereich des Faserbandes angeordnet, so dass Störungen möglich wären. Ein weiterer Vorteil dieser Anordnung liegt darin, dass auch Winkeländerungen feststellbar sind, wenn beispielsweise nur eines der oberen Gestelle 5 oder 5' nicht vollständig auf einem unteren Gestell 3 oder 3' aufliegt. Für die Ausführungsform, in der die obere Walze 4 nur auf der unteren Walze 2 mittels Eigengewicht aufliegt und ein einseitiger Abriss von Faserband den Betriebsablauf stören würde, könnte die sehr empfindliche Sensorik auslösen, da der Abstand der Walzen 2, 4 nicht mehr parallel wäre. Da beide Elemente des Sensors, nämlich der Sender 9 und Empfänger 10 gleichzeitig beim Einfädeln eines neuen Faserbandes mit der oberen Walze 4 um den Drehpunkt 7, 7' verschwenkt werden, sorgt eine Einstellvorrichtung 11, die zwischen dem Sender 9 und dem Empfänger 10 angeordnet ist, für das Auslösen des Signals.

Die Einstellvorrichtung 11 ist in diesem Ausführungsbeispiel an der Innenseite des unteren Gestells 3' im Bewegungsbereich des Faserbandes befestigt. Sie könnte aber auch an einer beliebigen anderen Stelle des unteren Gestells 3' angeordnet sein, solange sie den Lichtstrahl unterbricht und möglichst auf einer gegenüberliegenden Seite des Walzwerkes 1 zum Sender 9 hin angeordnet ist. Wesentlich ist, dass die Einstellvorrichtung 11 einstellbar und manipulationssicher angeordnet ist und den Lichtstrahl unterbrechen kann. In diesem Ausführungsbeispiel ist die Einstellvorrichtung 11 als Blech mit einer kleinen Bohrung 11a ausgeführt, durch die in Betriebsstellung der Lichtstrahl von dem Sender 9 zum Empfänger 10 gelangt und dabei die Bohrung 11a durchdringt. Sie übernimmt damit die Funktion einer Blende. Eine kleine Abweichung in der eingestellten Lage oder Distanz der oberen Walze 4 ist ausreichend, den Alarm auszulösen. Wird die obere Walze 4 hochgefahren, verschwenkt die obere Walze 4 mit dem Gestell 5, 5' und den Schwenkplatten 6, 6' um den Drehpunkt 7, 7', wobei sich der Sender 9 und der Empfänger 10 mit drehen. Der Lichtstrahl trifft nicht mehr durch die Bohrung 11a der am unteren Gestell 3' fest angeordneten Einstellvorrichtung 11, so dass der Lichtstrahl unterbrochen wird und der Sensor auslöst. Entscheidend ist, dass der Sender 9 und die Einstellvorrichtung 11 auf einer gegenüberliegenden Seite über die Breite der Walzenanordnung angeordnet sind. Dabei kann der Sender 9 an dem Bereich der feststehenden Walze 2 angeordnet sein und die Einstellvorrichtung an einem Bereich der einstellbaren Walze 4 angeordnet sein, oder umgekehrt.

Die Einstellvorrichtung 11 kann auch alternativ als Winkel angeordnet sein, wobei bei einer Lage- oder Winkelabweichung der Walzen 2, 4 zueinander ein Schenkel der Einstellvorrichtung 11 den Lichtstrahl unterbrechen kann.

Die Einstellung des Sensors kann erfolgen, indem die Walzen 2, 4 beispielsweise mit einem Blech auf einen Abstand von 0,5 mm entsprechend der gewünschte Dicke des Faserbandes eingestellt werden, und dann der Sender 9, der Empfänger 10 und die Einstellvorrichtung 11 justiert werden. Reißt im Betrieb das Faserband vollständig oder nur an einer Seite, führt das zu einer vollständigen oder nur einseitigen Verstellung der Walzen 2, 4, wodurch der Lichtstrahl die Bohrung 11a der Einstellvorrichtung nicht mehr durchdringt und damit den Sensor auslöst.

Die Lichtschranke kann auch direkt an einer linken oder rechten Seite eines Gestell 3, 3', 5. 5' angeordnet werden, wobei der Empfänger 10 oder Reflektor auf der gegenüberliegenden Seite befestigt wird. Das Signal wird dann ausgelöst, wenn entweder die Einstellvorrichtung 11 oder eine Schwenkplatte 6, 6' den Lichtstrahl unterbricht. Das ausgelöste Signal fließt in die Steuerung einer Maschine oder Anlage ein und unterbricht die weitere Zufuhr von Band, Fasern oder Vlies und warnt das Bedienpersonal. Wird das Walzwerk 1 nicht richtig verriegelt, wird ebenfalls der Lichtstrahl unterbrochen und das Signal des Sensors verhindert das Anfahren der Anlage und warnt das Bedienpersonal.

### Bezugszeichen

- 1: Walzwerk
- 2: Walze
- 3, 3': Gestell
- 4: Walze
- 5, 5': Gestell
- 6, 6': Schwenkplatte
- 7, 7': Drehpunkt
- 8, 8': Bohrung
- 9: Sender
- 10: Empfänger
- 11: Einstellvorrichtung
- 11a: Bohrung
- 12: Querträger

## Patentansprüche

1. Walzwerk für Faserbänder, umfassend mindestens eine fest angeordnete Walze (2) und eine einstellbare Walze (4), wobei die Walzen (2, 4) jeweils in einem ersten linken (3, 5) und einem zweiten rechten Gestell (3', 5') gelagert sind, wobei die Gestelle auf der linken Seite (3, 5) und der rechten Seite (3', 5') des Walzwerkes (1) jeweils mit einer Schwenkplatte (6, 6') verbunden sind, wobei ein Drehpunkt (7, 7') in den Gestellen (3, 3') der feststehenden Walze (2) angeordnet ist, so dass die einstellbare Walze (4) zur feststehenden Walze (2) verschwenkbar ist, mit einem Sensor zur Überwachung von Betriebsunregelmäßigkeiten, **dadurch gekennzeichnet, dass** der Sensor, der als Lichtschranke ausgebildet ist, über die Breite des Walzwerkes Betriebsunregelmäßigkeiten erkennt, indem der Lichtstrahl durch eine Einstellvorrichtung (11) oder eine Schwenkplatte (6, 6') unterbrechbar ist.

2. Walzwerk nach Anspruch 1, **dadurch gekennzeichnet, dass** der Sensor einen Sender (9) und einen Empfänger (10) umfasst, wobei der Sender (9) auf einer ersten Seite eines Gestells (3 oder 5) und der Empfänger (10) auf einer zweiten Seite eines Gestells (3' oder 5') angeordnet ist.

3. Walzwerk nach Anspruch 1, **dadurch gekennzeichnet, dass** der Sensor auf einer ersten Seite eines Gestells (3 oder 5) und ein Reflektor auf einer zweiten Seite eines Gestells (3' oder 5') angeordnet ist.

4. Walzwerk nach Anspruch 1, **dadurch gekennzeichnet, dass** der Sensor an mindestens einer Schwenkplatte (6, 6') angeordnet ist.

5. Walzwerk nach einem der vorhergehenden Ansprüche, **dadurch gekennzeichnet, dass** die Einstellvorrichtung (11) zwischen dem Sender (9) und dem Empfänger (10) oder Reflektor angeordnet ist.

6. Walzwerk nach Anspruch 5, **dadurch gekennzeichnet, dass** die Einstellvorrichtung (11) an einem Gestell (3 oder 3') der feststehenden Walze (2) angeordnet ist, das dem Sensor gegenüberliegt.

7. Vorrichtung zur Überwachung eines Walzwerkes (1), das mindestens eine fest angeordnete Walze (2) und eine einstellbare Walze (4) umfasst, **dadurch gekennzeichnet, dass** ein Sensor verwendet wird, der als Lichtschranke ausgebildet ist und der über die Breite des Walzwerkes (1) Betriebsunregelmäßigkeiten erkennt, wobei der Lichtstrahl durch eine Einstellvorrichtung (11) oder eine Schwenkplatte (6, 6') unterbrechbar ist.

## Claims

1. A roll system for slivers, comprising at least one stationarily disposed roll (2) and an adjustable roll (4), wherein the rolls (2, 4) are supported respectively in a first left (3, 5) and a second right frame (3', 5'), wherein, on the left side (3, 5) and the right side (3', 5') of the roll system (1), the frames are respectively connected to a swivel plate (6, 6'), wherein a point of rotation (7, 7') is disposed in the frames (3, 3') of the stationary roll (2), so that the adjustable roll (4) is swivelable to the stationary roll (2), with a sensor for monitoring operational irregularities, **characterized in that** the sensor, which is formed as a light barrier, recognizes operational irregularities over the width of the roll system **in that** the light beam is interruptible by an adjusting device (11) or a swivel plate (6, 6').

2. The roll system according to claim 1, **characterized in that** the sensor comprises a transmitter (9) and a receiver (10), wherein the transmitter (9) is disposed on a first side of a frame (3 or 5) and the receiver (10) on a second side of a frame (3' or 5').

3. The roll system according to claim 1, **characterized in that** the sensor is disposed on a first side of a frame (3 or 5) and the reflector on a second side of a frame (3' or 5').

4. The roll system according to claim 1, **characterized in that** the sensor is disposed at least at one swivel plate (6, 6').

5. The roll system according to any of the preceding claims, **characterized in that** the adjusting device (11) is disposed between the transmitter (9) and the receiver (10) or the reflector.

6. The roll system according to claim 5, **characterized in that** the adjusting device (11) is disposed at a frame (3 or 5') of the stationary roll (2), which frame is opposite the sensor.

7. A device for monitoring a roll system (1), which comprises at least one stationarily disposed roll (2) and an adjustable roll (4), **characterized in that** a sensor is used, which is formed as a light barrier and which recognizes operational irregularities over the width of the roll system (1), wherein the light beam is interruptible by an adjusting device (11) or a swivel plate (6, 6').

## Revendications

1. Système de rouleaux pour des rubans de fibres, comportant un rouleau (2) agencé de façon fixe et un rouleau (4) ajustable, les rouleaux (2, 4) étant supportés respectivement dans un premier bâti (3, 5) gauche et un deuxième bâti (3', 5') droit, les bâtis du côté gauche (3, 5) et du côté droit (3', 5') du système de rouleaux (1) étant respectivement connectés à un sabot inclinable (6, 6'), un point de rotation (7, 7') étant agencé dans les bâtis (3, 3') du rouleau fixe (2), de sorte que le rouleau ajustable (4) est pivotable par rapport au rouleau fixe (2), avec un capteur pour surveiller des irrégularités de fonctionnement, **caractérisé en ce que** le capteur, aménagé comme barrière lumineuse, détecte des irrégularités de fonctionnement sur la largeur du système de rouleaux, **en ce que** le rayon lumineux peut être interrompu par un dispositif d'ajustage (11) ou un sabot inclinable (6, 6').

2. Système de rouleaux selon la revendication 1, **caractérisé en ce que** le capteur comporte un transmetteur (9) et un récepteur (10), le transmetteur (9) étant agencé d'un premier côté d'un bâti (3 ou 5) et le récepteur (10) d'un deuxième côté d'un bâti (3' ou 5').

3. Système de rouleaux selon la revendication 1, **caractérisé en ce que** le capteur est agencé d'un premier côté d'un bâti (3 ou 5) et un réflecteur d'un deuxième côté d'un bâti (3' ou 5').

4. Système de rouleaux selon la revendication 1, **caractérisé en ce que** le capteur est agencé à au moins un sabot inclinable (6, 6').

5. Système de rouleaux selon l'une des revendications précédentes, **caractérisé en ce que** le dispositif d'ajustage (11) est agencé entre le transmetteur (9) et le récepteur (10) ou le réflecteur.

6. Système de rouleaux selon la revendication 5, **caractérisé en ce que** le dispositif d'ajustage (11) est agencé sur un bâti (3 ou 3') du rouleau fixe (2), lequel est à l'opposé du capteur.

7. Dispositif pour surveiller un système de rouleaux (1), lequel comporte au moins un rouleau (2) agencé de façon fixe et un rouleau (4) ajustable, **caractérisé en ce qu'**un capteur est utilisé, lequel est aménagé comme barrière lumineuse et lequel reconnaît des irrégularités de fonctionnement sur la largeur du système de rouleaux (1), le rayon lumineux pouvant être interrompu par un dispositif d'ajustage (11) ou un sabot inclinable (6, 6').
